Europäisches Patentamt

European Patent Office

Office européen des brevets

(11) Veröffentlichungsnummer: **0 034 799**
**A2**

(12) **EUROPÄISCHE PATENTANMELDUNG**

(21) Anmeldenummer: **81101137.8**

(22) Anmeldetag: **18.02.81**

(51) Int. Cl.³: **G 01 B 5/00**
**G 01 B 5/08, G 01 B 5/20**
**G 01 B 5/25, G 01 M 1/04**

(30) Priorität: **22.02.80 CH 1433/80**

(43) Veröffentlichungstag der Anmeldung:
**02.09.81 Patentblatt 81/35**

(84) Benannte Vertragsstaaten:
**AT BE DE FR GB IT NL SE**

(71) Anmelder: **GEORG FISCHER AKTIENGESELLSCHAFT**
**Mühlentalstrasse 105**
**CH-8201 Schaffhausen(CH)**

(72) Erfinder: **Büttiker, Urs**
**Duschletenstrasse 852**
**CH-4654 Lostorf(CH)**

(54) **Prüfgerät für Scheibenräder und/oder Felgenteile.**

(57) Sowohl Scheibenräder (12) als auch Felgenteile (13) sind auf eine Aufspannvorrichtung (3) aufspannbar, wobei die Felgenmitte (21) jeweils an selber Stelle liegt. Das Einspannen geschieht mittels eines Ringes (25), der Spannbacken (27) radial nach aussen gegen die innere Stirnseite (33) des Prüfkörpers (12, 13) drückt, wobei gleichzeitig der Zentrierdurchmesser (33) gemessen wird. Tastrollen (16, 17) ermitteln den Rundlauf, die Rundlaufdifferenz, den effektiven oberen und unteren Nenndurchmesser (56), den Seitenschlag, die effektive Nennweite (57). Ein Taster (43) ermittelt die Planheit des Flansches (32). Durch Entriegeln eines Riegelelementes (8) kann die Aufspannvorrichtung (3) zwecks Unwuchtprüfung über eine Kugelkalotte (2) gleiten, wobei eine Luftleitung (7) in die Kalotte mündet.

./...

EP 0 034 799 A2

Fig. 1

GEORG FISCHER AKTIENGESELLSCHAFT, 8201 Schaffhausen

2117/FzT / 13.02.1981/ LH-bs /

Prüfgerät für Scheibenräder und/oder Felgenteile

Die Erfindung betrifft ein Prüfgerät für Scheibenräder und/oder Felgenteile.

Es sind bereits Prüfgeräte für z.B. Felgenteile gemäss dem Oberbegriff des Hauptanspruches bekannt, die aber nur vereinzelte Operationen prüfen können und die dementsprechend beschränkt brauchbar sind. Auch die Messgenauigkeit und die Standzeit sind bei einem bekannten Gerät dieses Types mangelhaft, weil feste Kugeln als Tastvorrichtungen verwendet werden.

Es ist daher Aufgabe der Erfindung, die obengenannten Nachteile zu vermeiden und ein einziges Gerät für eine Mehrzahl von Prüfungen zu schaffen, das ausserdem für verschiedene Typen und Grössen von Prüfkörpern geeignet ist, wobei die Umstellung auf diese Typen und Grössen auf sehr einfache und zeitsparende Weise zu erfolgen hat.

Die Aufgabe wird gelöst durch die Lehre gemäss dem Hauptanspruch, während weitere vorteilhafte und/oder erfindungsgemässe Weiterbildungen aus den Unteransprüchen hervorgehen.

Es ist nunmehr möglich ein einziges Gerät für sämtliche Geometrie-und andere Messungen zu verwenden, wo früher, wenn überhaupt, verschiedenartige Geräte vonnöten waren, so dass sich ein Umspannen erübrigt. Durch den Wegfall dieser Mehrzahl von Geräten können sowohl Investitionskosten als auch Platz gespart werden. Weitere Vorteile gehen aus der Beschreibung eines zeichnerisch dargestellten Beispiels hervor.

Es zeigen:

Fig. 1 einen Querschnitt durch ein erfindungsgemässes Prüfgerät, wo links ein Scheibenrad und rechts ein Felgenteil eingespannt ist,

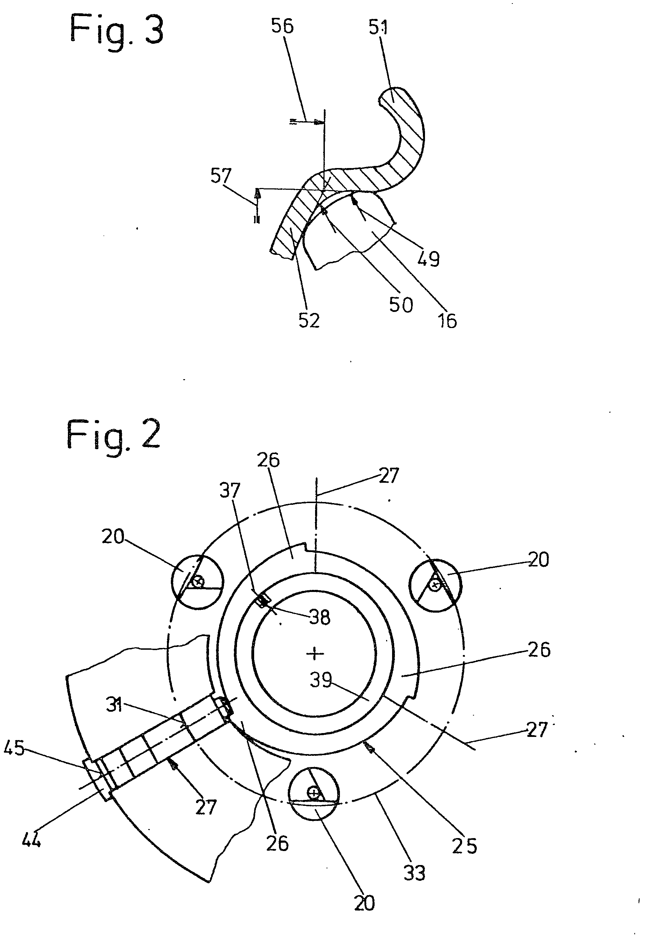

Fig. 2 eine Teildraufsicht nach Fig. 1,

Fig. 3 einen Teilquerschnitt (vergrössert) im Bereich der Testrolle und des Felgenhorns.

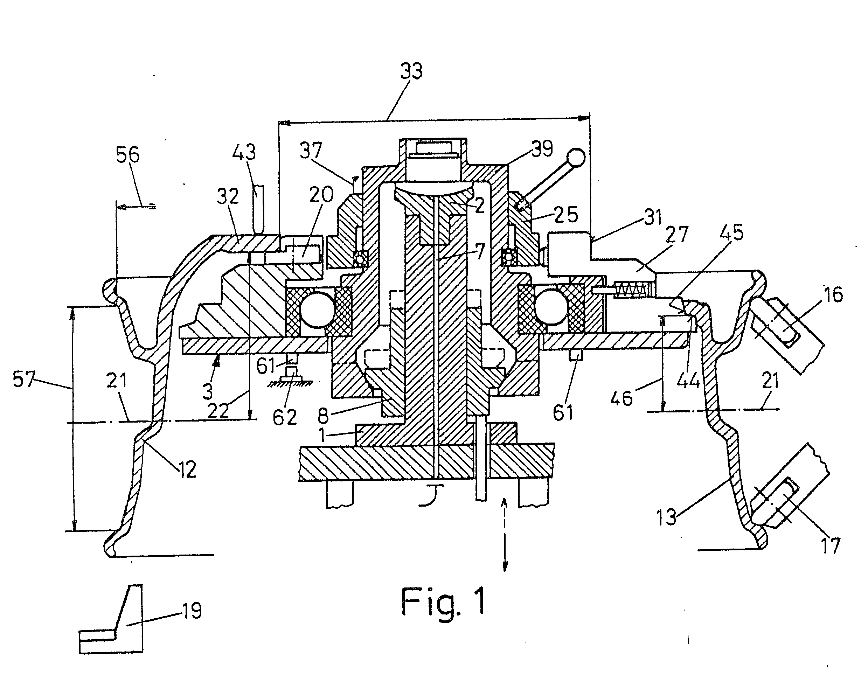

Fig. 1, zeigt eine feststehende Tragsäule 1, die am oberen Ende eine Kugelkalotte 2 aufweist, auf die sich eine Aufspannvorrichtung 3, abstützt. In die Kalotte 2 mündet eine Zufuhrleitung 7 für ein flüssiges oder gasförmiges Medium, vorzugsweise Luft. Ueber der Säule 1 ist ein Riegelelement, eine Büchse 8, von einer Verriegelungsposition in eine Entriegelungsposition (strichpunktiert gezeichnet) der Aufspannvorrichtung 3 vertikal verschiebbar. In entriegelter Position kann die Unwucht geprüft bzw. gemessen werden.

Das Gerät kann manuell oder automatisch beschickt werden und zwar mit Scheibenrädern 12 oder mit Felgenteilen 13 in beliebiger Reihenfolge. Nachdem die obere Tastrolle 16 und die untere Tastrolle 17, die in Kreuzschlitten gelagert sind, ausgefahren worden sind, wird das Rad 12 auf eine Absenkleiste 19 gelegt, die das Rad 12 schonend auf drei gleichmässig am Umfang verteilte Auflagenocken 20 bringt. Jeder Nocken 20 hat drei Höhenstufen, je für einen Scheibenradtyp mit unterschiedlicher Einpress-

0034799

tiefe 22, die durch Verdrehen zum Einsatz kommen. Sie haben den Zweck, dass die Felgenmitte 21 immer auf der gleichen Höhe bleibt, damit die Rollen 16, 17 nicht vertikal verstellt werden müssen. Durch Verdrehen eines Ringes 25, der am äusseren Umfang drei exzentrische Nockenteile 26 aufweist, werden gleichzeitig drei radial nach innen federnde Spannbacken 27 nach aussen gedrückt, so dass die Schultern 31 gegen die innere Stirnseite des Scheibenrad-Flansches 32 gedrückt werden, die den Zentrierdurchmesser 33 bildet. Für Scheibenräder, die ein Mittenloch mit zurückverlegten Partien aufweisen, ist die Anwendung eines Passringes möglich, dessen Aussenfläche dem Zentrierdurchmesser 33 entspricht und dessen Innenfläche an den Schultern 31 anliegt. Es ist eine Markierung 37 am Ring 25 vorgesehen, die mit einer Skala 38 mit einem Toleranzbereich an der Nabe 39 der Aufspannvorrichtung 3 zusammenwirkt, damit der Zentrierdurchmesser 33 gemessen bzw. geprüft werden kann. Bewährt haben sich insbesondere automatische Mittel, die den Verdrehungswinkel des Ringes 25 messen und die ein rotes Licht auf einer Instrumententafel aufleuchten lassen, wenn der Zentrierdurchmesser 33 ausserhalb des Toleranzbereiches liegt, woraufhin das Rad 12 aus der Produktion genommen werden kann (Ausschuss).

Auch kann mittels eines Tasters in Form eines Stiftes 43, die Planheit oder Welligkeit des Flansches 32 gemessen werden. Der Taster 43 wird federnd gegen den Flansch 32 gehalten und ist mit einem nicht dargestellten Messinstrument verbunden. Auch hier leuchtet ein rotes Licht auf wenn der Toleranzbereich überschritten wird.

Das Aufspannen eines Felgenteiles 13 verläuft sehr ähnlich. An jedem Spannbacken 27 befindet sich auch eine Auflagefläche 44 und eine Zentrierschulter 45. Der Vorteil ist hierbei, dass keine besonderen Massnahmen getroffen oder keine Zusatzstücke angebracht werden müssen, und dass die Felgenmitten 21 beider Prüfkörper 12, 13 auf gleicher Höhe liegen (Die Auflagefläche 44 liegt um ihre Einpresstiefe 46 über der gemeinsamen Felgenmitte).

Nach dem Aufspannen werden die Rollen 16, 17 eingefahren und die Aufspannvorrichtung 3 motorisch in Bewegung gesetzt. Der Radius 49 der Rolle 16, 17 ist etwas grösser als der Uebergangsradius 50 zwischen dem Felgenhorn 51 und der Steilschulter 52, so dass die Rolle zwei Berührungspunkte hat und somit registrierempfindlicher wird. Ausserdem verzeichnen Rollen weniger Wiederstand und Verschleiss als die bekannten, festen Kugeln.

Jede Rolle 16, 17, ist verbunden mit einem Messinstrument A bzw. B für den Rundlauf. Gemessen wird die Differenz vom jeweils kleinsten zum grössten Durchmesser: Messwert $\triangle R_A$ bzw. $\triangle R_B$. Die Instrumente sind auch für die Messung des effektiven Nenndurchmessers 56 vorgesehen. Ein weiteres Instrument C, gegebenenfalls mit Schreiber, ermittelt an den gleichen vertikalen Umfangsstellen des Prüfkörpers 12, 13 die Rundlaufdifferenz:

$$\triangle R_A \pm \triangle R_B = \triangle R_d \quad \text{(Anzeige)}$$

Die Rollen 16, 17 sind ebenfalls verbunden mit Messinstrumenten D bzw. E für den Seitenschlag: Messwert $\triangle S_D$ bzw. $\triangle S_E$. Die Instrumente sind auch für die Messung der effektiven Nennweite 57 vorgesehen. Ein weiteres Instrument F, gegebenenfalls mit Schreiber, ermittelt die errechnete Seitenschlagdifferenz in der Reifenmitte:

$$\frac{\triangle S_D \pm \triangle S_E}{2} = \triangle S_d \quad \text{(Anzeige)}$$

An der Aufspannvorrichtung 3 sind unter Dreh- oder Umlaufwinkeln von $90^o$ vier Schaltnocken 61 angebracht, die berührungslos mit einer Zähl- und Schaltvorrichtung zusammenwirken, die von einem Impulsgeber 62 gesteuert wird. Nach einer halben Umdrehung (zwei Nocken 61) schaltet die Elektronik die Messinstrumente ein und nach nochmals 1 1/4 Umdrehungen (fünf Nocken 61) wieder aus. Damit wird sicher gestellt, dass immer über eine volle Umdrehung und nach dem Anfahren gemessen wird, was der Messgenauigkeit zugute kommt.

Eine Alarm- und Blockieranlage ist derart konzipiert, dass, ob Scheibenrad 12 oder Felgenteil 13, bei drei gleichen Fehlern innerhalb einer Prüfzahleinheit, d.h. im beschriebenen Fall beim Messen von zehn nacheinander anfallenden Prüfkörpern:

| Prüfkörper | 12 | 12 | 12 | 13 | 12 | 13 | 13 | 12 | 13 | 13 |
|------------|----|----|----|----|----|----|----|----|----|----|
| Fehler | A |  | B |  | C |  | B | B |  | D |

das Gerät blockiert wird (Pfeil). Es muss dann zuerst abgeklärt werden, ob ein Systemfehler vorliegt.

Alle Messinstrumente zeigen durch eine rote Lampe an, wenn der jeweilige Toleranzbereich über- bzw. unterschritten worden ist.

Die Messungen am Rad 16, 17 werden vom Schlitten pneumatisch/ elektrisch umgewandelt (Analogwerte). Eine Umwandlung Analog-Digital ist möglich, ebenfalls eine Herausgabe eines automatisch gedruckten Kontrollstreifens pro Prüfkörper.

<u>P a t e n t a n s p r ü c h e</u>

1. Prüfgerät für Scheibenräder und/oder Felgenteile mit einer oberen und unteren, in Kreuzschlitten gelagerten Tastvorrichtungen im Bereich zwischen Felgenhorn und Steilschulter zur Ermittlung von Rundlauf und Seitenschlag, gekennzeichnet durch eine Aufspannvorrichtung (3), die mindestens drei über den Umfang gleichmässig verteilte, radial bewegbare und nach innen federnde Spannbacken (27) hat, welche gleichzeitig mittels eines exzentrische Nockenteile (26) aufweisenden Ringes (25) nach aussen drückbar sind, wobei jedem Spannbacken (27) ein Nockenteil (26) zugeordnet ist, und durch Mittel (37, 38), die die Verdrehung des Ringes (25) messen zur Ermittlung des Zentrierdurchmessers (33).

2. Prüfgerät nach Anspruch 1, dadurch gekennzeichnet, dass jeder Spannbacken (27) eine Schulter (31) für Scheibenräder (12) und eine Schulter (45) für Felgenteile (13) hat.

3. Prüfgerät nach Anspruch 1 oder 2, dadurch gekennzeichnet, dass die Aufspannvorrichtung (3) mindestens drei über den Umfang gleichmässig verteilte, höhenverstellbare Auflagen (20) hat, die vorteilhafterweise je drei Höhenstufen aufweisen.

4. Prüfgerät nach einem der Ansprüche 1 bis 3, dadurch gekennzeichnet, dass die Tastvorrichtung Rollen (16, 17) sind, die einen grösseren Radius (49) haben als der Uebergangsradius (50) zwischen Steilschulter (52) und Felgenhorn (51).

5. Prüfgerät nach einem der Ansprüche 1 bis 4, dadurch gekennzeichnet, dass ein Instrument vorgesehen ist, das die Rundlaufdifferenz ($\Delta R_d$) an gleichen Umfangstellen der beiden je mit einem Rundlaufmessinstrument verbundenen Tastvorrichtungen (16, 17) misst und dass gegebenenfalls Instrumente vorgesehen sind, die die effektiven oberen und unteren Nenndurchmesser (56) messen.

6. Prüfgerät nach einem der Ansprüche 1 bis 5, dadurch gekennzeichnet, dass ein Instrument vorgesehen ist, dass die Seitenschlagdifferenz ($\Delta S_d$) an gleichen Umlaufstellen der beiden je mit einem Seitenschlagmessinstrument verbundenen Tastvorrichtungen (16, 17) misst und dass gegebenenfalls ein Instrument vorgesehen ist, das die effektive Nennweite (57) misst.

7. Prüfgerät nach einem der Ansprüche 1 bis 6, dadurch gekennzeichnet, dass ein Taster (43) vorgesehen ist, der federnd gegen den Flansch (32) gedrückt gehalten ist und der mit einem Messinstrument zur Ermittlung der Planheit verbunden ist.

8. Prüfgerät nach einem der Ansprüche 1 bis 7, dadurch gekennzeichnet, dass die Aufspannvorrichtung (3) auf eine feststehende, eine Kugelkalotte (2) aufweisende Säule (1) abgestützt ist und dass sie zwecks Unwuchtprüfung durch ein Riegelelement (8) aus der vertikalen Verriegelungsposition bringbar ist und dass eine Medium-Zufuhrleitung (7), insbesondere für Luft, in die Kalotte (2) mündet.

9. Prüfgerät nach einem der Ansprüche 1 bis 8, dadurch gekennzeichnet, dass Schaltnocken (61) vorgesehen sind, die berührungslos mit einer Zähl- und Schaltvorrichtung (62) zusammenwirken, die nach vorbestimmten Umlaufwinkeln die Messinstrumente ein- und ausschalten.

10. Prüfgerät nach einem der Ansprüche 1 bis 9, dadurch gekennzeichnet, dass eine Alarm- und Blockiervorrichtung vorgesehen ist, die das Gerät blockiert bei einer vorbestimmten Zahl gleicher Fehler pro Prüfzahleinheit.

Fig. 1

0034799

Fig. 3

Fig. 2

2117/FzT